## Europäisches Patentamt
## European Patent Office
## Office européen des brevets

(19)

(11) Veröffentlichungsnummer : **0 034 748**
**B1**

(12) **EUROPÄISCHE PATENTSCHRIFT**

(45) Veröffentlichungstag der Patentschrift :
**17.10.84**

(21) Anmeldenummer : **81100919.0**

(22) Anmeldetag : **10.02.81**

(51) Int. Cl.³ : **C 08 F285/00**, C 08 F279/02,
C 08 F 2/22

(54) **Kerbschlagzähe Polymerisate mit verbesserter Witterungsbeständigkeit.**

(30) Priorität : **23.02.80 DE 3006804**

(43) Veröffentlichungstag der Anmeldung :
**02.09.81 Patentblatt 81/35**

(45) Bekanntmachung des Hinweises auf die Patenterteilung : **17.10.84 Patentblatt 84/42**

(84) Benannte Vertragsstaaten :
**BE DE FR GB IT NL**

(56) Entgegenhaltungen :
**FR-A- 1 371 866
FR-A- 2 246 594
US-A- 3 886 232
CHEMICAL ABSTRACTS, Band 90, Nr. 8, Februar
1979, Seite 32, Nr. 55728g Columbus, Ohio, U.S.A.
CHEMICAL ABSTRACTS, Band 78, Nr.22, 4. Juni 1973,
Seite 51, Nr. 137322m Columbus, Ohio, U.S.A.**

(73) Patentinhaber : **BAYER AG
Konzernverwaltung RP Patentabteilung
D-5090 Leverkusen 1 Bayerwerk (DE)**

(72) Erfinder : **Lindner, Christian, Dr.
Riehler Strasse 200
D-5000 Köln 60 (DE)**
Erfinder : **Ott, Karl-Heinz, Dr.
Paul-Klee-Strasse 54
D-5090 Leverkusen 1 (DE)**
Erfinder : **Pischtschan, Alfred, Dr.
Zur Eiche 33
D-5067 Kürten (DE)**

EP 0 034 748 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Pfropfpolymerisate und ihre Anwendung als thermoplastische Formmassen.

Im Prinzip bestehen die erfindungsgemäßen Pfropfpolymerisate aus Teilchen mit einem Dienkautschuk als Kern, welcher von wenigstens zwei chemisch verschiedenen Hüllen umgeben ist. Sogenannte ABS (Acrylnitril-Butadien-Styrol)-Kunststoffe haben große technische Bedeutung ; wegen des darin in polymerer Form enthaltenen Diens (z. B. Butadien) ist ihre Witterungsbeständigkeit nicht befriedigend, so daß sie im Freien nur begrenzt verwendet werden können. Diesem Mangel kann man auch mit UVabsorbierenden Stoffen oder Lichtschutzmitteln nur unvollkommen abhelfen. Ersetzt man den oxidations-empfindlichen Dienkautschuk z. B. durch einen Alkylacrylatkautschuk, dann ist die Schlagfestigkeit und das Aussehen der Formkörper nicht befriedigend. Für gute physikalische Eigenschaften müssen die statt des Dienkautschuks eingesetzten Acrylesterkautschuke vernetzt sein. Um sie herzustellen, hat man geeignete Monomere in Emulsion in Gegenwart polyfunktioneller Monomer polymerisiert oder das zunächst unvernetzte Polymerisat mit einem organischen Peroxid, z. B. Benzoylperoxid behandelt.

Der Acrylesterkautschuk ist dennoch weicher und weniger elastisch als der Dienkautschuk. Spritzgußteile aus Pfropfpolymerisaten auf Acrylesterbasis haben häufig an der gesamten Oberfläche einen perlmuttartigen Glanz, der sich beim Färben noch verstärken kann, so daß das Produkt für eine allgemeine Verwendung wenig geeignet ist. Die Schlagfestigkeit dieser Formmassen ist uneinheitlich. Man kann diese Mängel beheben, indem man den Vernetzungsgrad des Kautschuks erhöht. Dann wird aber die Schlagzähigkeit stark herabgesetzt.

In der FR-PS 2 246 594 wird die Herstellung eines Pfropfpolymerisats aus einem Butadien/Styrol-Copolymerisat (Kautschuk) als Kern, einer 1. Hülle aus einem thermoplastischen Polymerisat von 20-50 Gew.-% eines Alkylesters der Acryl- oder Methacrylsäure (bevorzugt Methylmethacrylat), 40-60 Gew.-% eines Vinylaromaten, 0-30 Gew.-% eines ungesättigten Nitrils und 0,1-2,0 % eines nicht konjugierten Diolefins und einer 2. Hülle aus einem Copolymerisat von 55-85 Gew.-% ungesättigtem Nitril und 15-45 Gew.-% Monovinylaromat beschrieben. Dieses Produkt besteht aus einem Dienkaustchuckkern (unter Kautschuk wird ein Material verstanden, dessen Gläsübergangstemperatur unter − 20 °C liegt) und zwei übereinander angeordneten Thermoplasthüllen. Man erreicht durch die angegebene Arbeitsweise Transparenz, wenn man den Kautschuk richtig wählt, und durch hohen Acrylnitrilanteil in der Pfrophülle Gasundurchlässigkeit.

Im Gegensatz dazu sind die Pfropfpolymerisate der vorliegenden Erfindung aufgebaut aus einem Dienkautschukkern, einer 1. Hülle aus vernetztem Acrylatkautschuk, und einer 2. Hülle aus harzbildenden Monomeren. Es wird durch diesen Aufbau erreicht, daß die Produkte oxidationsstabil sind und hohe Kerbschlagzähigkeit besitzen. Wesentlicher Unterschied ist, daß die 1. Hülle im Falle der FR-PS 2 246 594 ein Thermoplast und im Falle der vorliegenden Erfindung ein stark vernetzter Acrylatkautschuk ist.

Gegenstand der Erfindung sind demnach teilchenförmige Pfropfpolymerisate aus einem Kern (a), der einen stark vernetzten Dienkautschuk darstellt, einer ersten Hülle (b), die einen vernetzten Acrylatkautschuk auf der Basis von $C_1$-$C_8$-Alkylestern der Acrylsäure, 0,05-10 Gew.% (bezogen auf Acrylatkautschuk) eines polyfunktionellen Monomeren und gegebenenfalls bis 40 Gew.-% eines anderen Vinylmonomeren darstellt, und einer zweiten Hülle (c), die ein Polymerisat oder Copolymerisat aus harzbildenden Monomoren darstellt.

Das Mengenverhältnis des Kerns (a) und der ersten Hülle (b) ist 0,1 zu 99,9 bis 80 zu 20, bevorzugt 10 zu 90 bis 50 zu 50, und der Anteil von (c) am gesamten Pfropfpolymerisat 90 bis 10, bevorzugt 80 bis 40 Gew.-%. Die erfindungsgemäßen Pfropfpolymerisate haben mittlere Teilchendurchmesser ($d_{50}$) von 0,05 bis 20 μm, bevorzugt 0,1 bis 3 μm. Besonders bevorzugte Teilchendurchmesser sind 0,1 bis 1 μm.

Das Material des Kerns (a) ist ein vernetzter Kautschuk aus einem oder mehreren konjugierten Dienen, wie Polybutadien oder ein Copolymerisat eines konjugierten Diens mit einem ethylenisch ungesättigten Monomer wie Styrol und/oder Acrylnitril.

Die erste Hülle (b) stellt einen vernetzten Acrylatkautschuk dar und ist insbesondere ein vernetztes Polymerisat aus Acrylsäure-$C_1$-$C_8$-alkylestern, gegebenenfalls in Mischung mit bis zu 40 Gew.-% anderen Vinylmonomeren. Zu den geeigneten polymerisierbaren $C_1$-$C_8$-Alkylestern der Acrylsäure gehören beispielsweise Methyl-, Ethyl-, Butyl-, Octyl- und 2-Ethylhexylester. Sie können einzeln oder in Mischung eingesetzt werden. Zur Vernetzung werden polyfunktionelle Monomere copolymerisiert. Beispiele sind : Ester von ungesättigen Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallycyanurat, Triallylisocyanurat ; Divinylverbindungen wie Divinylbenzol ; Ester ungesättigter Carbonsäuren mit ungesättigten Alkoholen (bevorzugt 6 bis 12 Kohlenstoffatome im Esterrest), wie Allylmethacrylat ; Phosphorsäureester, beispielsweise Triallyphosphat und 1,3,5-Triacryloylhexahydro-s-triazin. Besonders bevorzugte polyfunktionelle Monomere sind Triallylcyanurat, Triallylisocyanurat, Triallyphosphat, Allylmethacrylat, Ethylenglykoldimethacrylat und 1,3,5-Triacryloylhexahydro-s-triazin.

Die Menge der zur Vernetzung benutzten polyfunktionellen Monomeren ist bevorzugt 0,05 bis 10 Gew.-%, insbesondere 0,1 bis 5,05 Gew.-%, der Masse der ersten Hülle (b). Das Elastomer der ersten Hülle (b) kann zusätzlich noch ein copolymerisierbares Monomeres oder mehrere solcher Monomeren

2

vom Vinyl- oder Vinylidentyp einpolymerisiert enthalten. Beispiele sind : Methylmethacrylat, Butylacrylat, Acrylnitril, Styrol, α-Methylstyrol, Acrylamide, Vinylalkylether. Diese Comonomeren können in Mengen bis zu 40 Gew.-% des Polymerisats (b) einpolymerisiert werden.

Die zweite Hülle (c) stellt ein pfropfpolymerisiertes Polymerisat aus Monomeren wie α-Methylstyrol, Styrol/Acrylnitril, Methylmethacrylat oder ein Mischpolymerisat dieser Monomeren dar, bevorzugt sind Copolymerisate aus Styrol und Acrylnitril im Gewichtsverhältnis 90 : 10 bis 50 : 50.

Die erfindungsgemäßen Pfropfpolymerisate können in wäßriger Emulsion wie folgt hergestellt werden : zunächst wird durch Emulsionspolymerisation eines konjugierten Diens der Dienkautschuk für den Kern (a) in Latexform hergestellt. Diese Polymerisation ist bekannt. Dann wird in Gegenwart des Dienkautschuklatex, ebenfalls in wäßriger Emulsion, der Acrylatkautschuk für die erste Hülle hergestellt, indem man die Monomeren (Hauptbestandteil wenigstens ein Acrylat) in dem Latex emulgiert und in an sich bekannter Weise an radikalbildende Initiatoren polymerisiert. Der Acrylatkautschuk polymerisiert auf den Dienkautschuk. Er kann durch Mitverwendung polyfunktioneller Monomer bereits bei der Herstellung vernetzt werden.

Bei dieser Pfropfpolymerisation der ersten Hülle (b) muß die Bildung neuer Teilchen möglichst vollständig unterbunden werden. Ein Emulsionsstabilisator muß in zur Oberflächenbedeckung der Teilchen erforderlichen Menge vorhanden sein. Die Größe dieser Teilchen ist durch die Reaktionsführung in weiten Grenzen zu variieren. Verwendet man als Kern (a) einen agglomerierten Latex, um große Teilchen zu erhalten, so können diese mehrere Dienkautschukpartikel enthalten. Man kann die Polymerisation der ersten Hülle (b) auch so führen, daß Partikel mit Dienkautschukkern und gleichzeitig Partikel aus reinem vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks wird auf den erhaltenen Latex ein Vinylmonomer oder ein Gemisch aus Vinylmonomeren in Emulsion polymerisiert. Dabei bilden sich die erfindungsgemäßen Pfropfpolymerisate unter Ausbildung der zweiten Hülle (c). Bei dieser an sich bekannten Pfropfpolymerisation, die üblicherweise in Gegenwart von Radikalstartern, z. B. wasserlöslichen Initiatoren, Emulgatoren oder Komplexbildner/Pfropfaktivatoren, sowie Reglern durchgeführt wird, bilden sich im allgemeinen neben dem Pfropfpolymerisat im bestimmten Ausmaß freie Polymerisate bzw. Copolymerisate der die zweite Hülle (c) bildenden Monomeren. Die Menge dieses ungepfropften Polymerisats kann durch den Pfropfgrad bzw. die Pfropfausbeute charakterisiert werden, sie hängt ab u. a. von den Polymerisationsbedingungen, der Zusammensetzung der ersten Hülle (b), der Größe der zu pfropfenden Teilchen, und der Menge an gepfropftem Acrylatkautschuk. « Pfropfpolymerisat » im Sinne der Erfindung ist deshalb das durch Polymerisation von Vinylmonomeren in Gegenwart des Kautschuklatex erhaltene Produkt, genau genommen also ein Gemisch aus Pfropfpolymerisat und freiem Copolymerisat der Pfropfmonomeren.

Die so hergestellten Pfropfpolymerisate können nach bekannten Verfahren aufgearbeitet werden, z. B. durch Koagulation der Latices mit Elektrolyten (Salze, Säuren oder Gemische davon) und anschließende Reinigung und Trocknung.

Die erfindungsgemäßen Pfropfpolymerisate sind kerbschlagzähe thermoplastische Formmassen mit verbesserter Witterungs- und Alterungsstabilität. Das erfindungsgemäße Pfropfpolymerisat kann direkt verwendet werden, wenn es zu etwa 5 bis 40 Gew.-% aus Kern (a) und erster Hülle (b), bezogen auf das gesamte Pfropfpolymerisat, besteht. Wenn der Gehalt an (a) plus (b) höher ist, kann ein starres Harz zugemischt werden. Starre Harze sind vorzugsweise Styrol-, Methylmethacrylat-, Acrylinitril-Terpolymere, Styrol- bzw. α-Methylstyrol-, Acrylnitril-Copolymere, Styrol-, Acrylnitril-, Acrylester-Terpolymere oder Methylmethacrylate-Homo- bzw. Copolymere.

Man kann die erfindungsgemäßen Pfropfpolymerisate auch mit bekannten Kautschuk-modifizierten Kunststoffen vermischen, z. B. mit ABS-Kunststoffen oder mit Acrylatkautschuk-modifizierten Harzen (« ASA-Harzen »). Man kann so die Alterungsbeständigkeit und elektrostatischen Eigenschaften von ABS ohne Beeinträchtigung der mechanischen Eigenschaften verbessern oder die mechanischen Eigenschaften von ASA-Harzen und die Oberflächenbeschaffenheit von Formkörpern daraus.

Die erfindungsgemäßen Formmassen können Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

Teile und Prozentangaben in den folgenden Ausführungsbeispielen sind immer Gewichts-Teile und Gewichts-Prozent.

Ausführungsbeispiele

Beispiel 1

Herstellung der Pfropfpolymerisate

1.1 Herstellung der Polydienlatices (Kern(a))

3

1.1.1 In einem Reaktor wird unter Rühren folgende Emulsion bei 65 °C bis zum praktisch vollständigen Monomerumsatz innerhalb von ca. 22 Std. polymerisiert :

```
 90,0   Gew.-Tle Butadien
 10,0   Gew.-Tle Styrol
  1,8   Gew.-Tle NaSalz der disproportionierten Abietinsäure
  0,257 Gew.-Tle Natriumhydroxid
  0,3   Gew.-Tle n-Dodecylmercaptan
  1,029 Gew.-Tle Na-ethylendiamintetraacetat
  0,023 Gew.-Tle Kaliumpersulfat
176     Gew.-Tle Wasser
```

Es wird ein Latex erhalten, der Butadien/Styrol-Copolymerisatteilchen eines mittleren Durchmessers ($d_{50}$) von 0,1 μm in einer Konzentration von ca. 35-36 % enthält.

1.1.2. Nach Vorschrift 1.1.1 wird bei 60-68 °C innerhalb von ca. 110 Std. folgende Emulsion polymerisiert :

```
100,0   Gew.-Tle Butadien
 70     Gew.-Tle Wasser
  1,146 Gew.-Tle Na-Salz der disproportionierten Abietinsäure
  0,055 Gew.-Tle ethylendiamintetraessigsaures Na
  0,137 Gew.-Tle Natriumhydroxid
  0,028 Gew.-Tle Natriumhydrogencarbonat
  0,282 Gew.-Tle Kaliumpersulfat
```

Es wird ein Latex erhalten, der Polybutadienteilchen eines mittleren Durchmessers ($d_{50}$) von 0,4 μm in einer Konzentration von ca. 58 % enthält.

1.2 Herstellung von Acrylatkautschukteilchen, die Polydienkerne enthalten (Kern (a) mit 1. Hülle (b))

1.2.1 In einem Reaktor wird unter Rühren bei 65 °C folgende Mischung vorgelegt :

```
 150   Gew.-Tle Latex gemäß 1.1.1
1 350  Gew.-Tle Wasser
   4,1 Gew.-Tle Kaliumpersulfat in
 260   Gew.-Tln Wasser
```

Innerhalb von 4-5 Std. werden bei 65 °C folgende Mischungen in den Reaktor getrennt eindosiert :
Mischung A (siehe Tabelle 1)
Mischung B 1 010 Gew.-Tle Wasser
                35 Gew.-Tle Na-Salz der disproportionierten Abietinsäure
                35 Gew.-Tle 1 n-Natronlauge

Anschließend läßt man 4 Std. bei 65 °C auspolymerisieren.

Tabelle 1 : Mischungen A

Beispiel — Monomere (Gew.-Tle)

1.2.1.1 1 420 n-Butylacrylat/10 Triallylcyanurat
1.2.1.2 1 220 n-Butylacrylat/200 c-Hexylacrylat/10 Triallycyanurat
1.2.1.3 1 278 n-Butylacrylat/142 Methylmethacrylat/20 Triallylcyanurat
1.2.1.4 1 400 n-Butylacrylat/8 Triallyphosphat/1 Ethylenglykoldimethacrylat

Die gebildeten Polymerisate besitzen Gelgehalte von über 85 Gew.-%, Quellungsgrade zwischen 5-15, und mittlere Teilchendurchmesser ($d_{50}$) von 0,2-0,3 μm.

1.2.2. In einem Reaktor wird vorgelegt und auf 65 °C aufgeheizt :

```
 50 Gew.-Tle Latex 1.1.2
285 Gew.-Tle Wasser
```

Es wird initiiert mit einer Mischung aus

```
 0,81 Gew.-Tln Kaliumpersulfat
51,0  Gew.-Tln Wasser
```

0 034 748

Innerhalb von 5 Std. werden bei 65 °C folgende Mischungen in den Reaktor getrennt eindosiert:
Mischung A (siehe Tabelle 2)
Mischung B 240 Gew.Tle Wasser
4,8 Gew.-Tle Na-Sulfonat von $C_{14}$-$C_{18}$-Kohlenwasserstoffen
Anschließend läßt man 4 Std. bei 65 °C auspolymerisieren.

Tabelle 2: eingesetzte Mischung A

Beispiel — Monomere (Gew.-Tle)

1.2.2.1. 276 n-Butylacrylat/0,5 Triallylcyanurat
1.2.2.2. 279 2-Ethylhexylacrylat/0,6 Triallylcyanurat
Die gebildeten Polymerisate besitzen Gelgehalte von über 85 Gew.-%, Quellungsgrade zwischen 5-15, und eine breite Teilchendurchmesserverteilung im Bereich von 0,15-0,9 μm ($d_{10}$-$d_{90}$).

1.3 Herstellung der Pfropfpolymerisate

Allgemeine Vorschrift:
In einem Reaktor werden vorgelegt und auf 65 °C aufgeheizt:

283 Gew.-Tle Wasser
X Gew.-Tle Latex

Es wird initiiert mit einer Mischung aus

6 Gew.-Tln Kaliumpersulfat
415 Gew.-Tln Wasser

Innerhalb von 5 Std. läßt man bei 65 °C folgende Mischung unter Rühren in den Reaktor einlaufen:
Mischung A — Y Gew.-Tle Monomer 1 } s. Tabelle 3
Z Gew.-Tle Monomer 2 }
Mischung B — 800 Gew.-Tle Wasser
21 Gew.-Tle Na-Sulfonat von $C_{14}$-$C_{18}$-Kohlenwasserstoffen
Anschließend wird 4 Std. bei 65 °C auspolymerisiert.
Die Pfropfpolymerisat-Latices werden nach Zugabe einer wäßrigen Stabilisatordispersion, entsprechend 0,25-1,5 Gew.-Tln eines phenolischen Antioxidants per 100 Gew.-Tle Feststoff-Latex, durch Elektrolyt- bzw. Säurezusatz koaguliert. Die resultierenden Pulver werden bei 70 °C im Vakuum getrocknet.
Die aus der Emulsion isolierten Pfropfpolymerisate werden mit thermoplastischen Harzpolymerisaten und gegebenenfalls herkömmlichen Pfropfpolymerisaten, sowie gegebenenfalls mit Additionen nach 2.1 zu Formmassen verarbeitet.

Tabelle 3

Zusammensetzungen der Polymerisationsansätze nach der allgemeinen Vorschrift in 1.3

| | | Mischung A | |
| Beispiel | X Gew.-Teile Latex | Y Gew.-Teile Monomer 1 | Z Gew.-Teile Monomer 2 |
|---|---|---|---|
| 1.3.1. | 1 857 Latex 1.2.1.1. | 178 Acrylnitril | 460 Styrol |
| 1.3.2. | 1 857 Latex 1.2.1.2. | 178 Acrylnitril | 460 Styrol |
| 1.3.3. | 1 857 Latex 1.2.1.3. | 178 Acrylnitril | 460 Stryol |
| 1.3.4. | 1 857 Latex 1.2.1.4. | 178 Acrylnitril | 460 Styrol |
| 1.3.5. | 1 857 Latex 1.2.2.1. | 178 Acrylnitril | 460 Styrol |
| 1.3.6. | 1 850 Latex 1.2.2.2. | 178 Acrylnitril | 460 Styrol |
| 1.3.7. | 2 600 Latex 1.2.2.1. | 107 Acrylnitril | 276 Styrol |
| 1.3.8. | 2 500 Latex 1.2.2.1. | 300 Methylmethacrylat | 83 Styrol |

2. Eigenschaften einiger thermoplastischer Formmassen, die die erfindungsgemäßen Pfropfpolymerisate als Mischungskomponente enthalten.

5

**0 034 748**

Die in der Tabelle 4 angegebenen Formmassen werden hergestellt durch Compoundierung auf einem Banbury-Mischer BR (Pomini-Farrel) unter folgenden Mischbedingungen :

Massetemperatur : 190-225 °C
Mischzeiten : 1,5-2 Min.
Cycluszeiten : 2-4 Min.

Das Mischgut fällt aus dem Banbury-Mischer auf einen Zweiwalzenstuhl (Walze 1 T = 160 °C, Walze 2 T = 150 °C), wird in Form eines Bandes abgenommen und nach Abkühlung granuliert.

Tabelle 4

Thermoplastische Mischungen

| Beispiel | Pfropfpolymer Teile | | Pfropfpolymer Teile | | Harz Teile | Gleitmittel Teile | Pigmente Teile |
|---|---|---|---|---|---|---|---|
| 2.3.1 | 40 | 1.3.1 | — | | 60 SAN | 3 AC | — |
| 2.3.1 | 40 | 1.3.2 | — | | 60 SAN | 3 AC | — |
| 2.3.3 | 40 | 1.3.3 | — | | 60 SAN | 3 AC | — |
| 2.3.4 | 40 | 1.3.4 | — | | 60 SAN | 3 AC | — |
| 2.3.5 | 40 | 1.3.5 | — | | 60 SAN | 3 AC | — |
| 2.3.6 | 40 | 1.3.6 | — | | 60 SAN | 3 AC | — |
| 2.3.7 | 25 | 1.3.7 | — | | 75 SAN | 3 AC | — |
| 2.3.8 | 20 | 1.3.8 | 20 | P1 | 60 SAN | 3 AC | — |
| 2.3.9 | 30 | 1.3.2 | 10 | P1 | 60 SAN | 3 AC | 2 $TiO_2$ |
| 2.3.10 | 20 | 1.3.2 | 20 | P1 | 60 SAN | 3 AC | 2 $TiO_2$ |
| 2.3.11 | 10 | 1.3.2 | 30 | P1 | 60 SAN | 3 AC | 2 $TiO_2$ |
| 2.3.12 | 40 | 1.3.2 | — | | 60 SAN | 3 AC | 2 $TiO_2$ |
| 2.3.13 | — | | 40 | P1 | 60 SAN | 3 AC | — (Vergleichsbeisp.) |

AC = Bisstearylamid des Ethylendiamins
P1 = Pfropfpolymerisat von 50 Tln Styrol und Acrylnitril (Verhältnis 72 : 38) auf 50 Tle Polybutadien-Latex. Mittlerer Teilchendurchmesser ($d_{50}$) 0,4 µ.
SAN = Copolymer von von 72 % Styrol und 28 % Acrylnitril. Staudinger-Index $[\eta]$ = 0,85 dl/g (DMF, 25 °C).

2.2 Prüfmethodik

Aus dem Granulat werden durch Spritzguß bei 220 °C Normkleinstäbe hergestellt und diese nach DIN-Methoden auf Kerbschlagzähigkeit, Härte und Wärmestandfestigkeit (Vicat B) untersucht.

Tabelle 5

Eigenschaften der Formmassen aus Tabelle 4[1]

| Mischung | Schlagzähigkeit 23 °C (kJ/m²) | Kerbschlag-zähigkeit 23 °C (kJ/m²) | Kugelein-druckhärte (39 s) | Wärmeform-beständigkeit (°C) Vicat B | Oberflächenbe-schaffenheit der Spritzgußform-körper[2] |
|---|---|---|---|---|---|
| 2.3.1. | nicht gebrochen | 10,5 | 90 | 93 | glänzenden Oberfläche, kein perlmuttartiges Aussehen |
| 2.3.2. | " | 11,0 | 91 | 90 | " |
| 2.3.3. | " | 10,9 | 94 | 94 | " |
| 2.3.4. | " | 11,8 | 90 | 90 | " |
| 2.3.5. | " | 13,9 | 84 | 90 | " |
| 2.3.6. | " | 14,0 | 87 | 91 | " |

6

Tabelle 5 (Fortsetzung)

| Mischung | Schlagzähigkeit 23 °C (kJ/m²) | Kerbschlag-zähigkeit 23 °C (kJ/m²) | Kugelein-druckhärte (39 s) | Wärmeform-beständigkeit (°C) Vicat B | Oberflächenbe-schaffenheit der Spritzgußform-körpen[2] |
|---|---|---|---|---|---|
| 2.3.7. | " | 13,8 | 86 | 89 | " |
| 2.3.8. | " | 15,1 | 80 | 90 | " |
| 2.3.9. | " | 12,5 | 81 | 92 | " |
| 2.3.10. | " | 14,0 | 81 | 92 | " |
| 2.3.11. | " | 16,0 | 80 | 93 | " |
| 2.3.12. | " | 11,0 | 80 | 93 | " |
| 2.3.13. | " | 17,5 | 78 | 92 | " |

[1]) Im Gegensatz zu Spritzgußformkörpern aus Mischung 2.3.13., die nach 20 Tagen Bewitterungstest in einer Weatherometer-Apparatur eine starke Vergilbung aufweisen, zeigen Formkörper aus Mischungen 2.3.1.-2.3.7. praktisch keine Vergilbung, und die Mischungen 2.3.8.-2.3.11. geringere Vergilbungen als Körper aus Mischung 2.3.13.
[2]) Visuelle Beurteilung.

Tabelle 5 zeigt, daß kerbschlagzähe Formmassen auf Basis der erfindungsgemäßen Pfropfpolymerisate neben einer hervorragenden Oberflächenbeschaffenheit, auch im Vergleich zu herkömmlichem ABS-Material, eine wesentlich verbesserte Witterungsstabilität (Verfärbung) aufweisen.
Teilchengrößen sind durch Lichtstreuungsmessungen ermittelt [1].
Gelgehalte/Quellungsgrad (gemessen bei 25 °C in DMF) [1].

## Ansprüche

1. Teilchenförmige Pfropfpolymerisate aus einem Kern (a), der einen stark vernetzten Dienkautschuk darstellt, einer ersten Hülle (b), die einen vernetzten Acrylatkautschuk auf der Basis von $C_1$-$C_8$-Alkylestern der Acrylsäure, 0,05-10 Gew.-%, bezogen auf Acrylatkautschuk, eines polyfunktionellen Monomeren und gegebenenfalls bis 40 Gew.-% eines anderen Vinylmonomeren darstellt, und einer zweiten Hülle (c), die ein Polymerisat oder Copolymerisat aus harzbildenden Monomeren darstellt.
2. Teilchenförmige Pfropfpolymerisate nach Anspruch 1, in denen das Mengenverhältnis von (a) zu (b) 0,1 : 99,9 bis 80 : 20 ist, und der Anteil von (c) am Pfropfpolymerisat 90 bis 10 Gew.-%.
3. Teilchenförmige Pfropfpolymerisate nach Anspruch 1, in denen der Kern (a) Polybutadien oder ein Butadiencopolymerisat ist.

## Claims

1. Particulate graft polymers comprising a core (a) formed by a highly crosslinked diene rubber, a first shell (b) formed by a crosslinked acrylate rubber based on $C_1$-$C_8$-alkyl esters of acrylic acid, 0.05-10 % by weight, based on the acrylate rubber, of a polyfunctional monomer and optionally up to 40 % by weight of another vinyl monomer, and a second shell (c) formed by a polymer or copolymer of resin-forming monomers.
2. Particulate graft polymers according to Claim 1, in which the quantity ratio of (a) to (b) is 0.1 : 99.9 to 80 : 20, and the proportion of (c) in the graft polymer is 90 to 10 % by weight.
3. Particulate graft polymers according to Claim 1, in which the core (a) is polybutadiene or a butadiene copolymer.

## Revendications

1. Polymères greffés en particules formés d'un cœur (a) qui consiste en un caoutchouc diénique fortement réticulé, d'une première enveloppe (b) qui représente un caoutchouc d'acrylate réticulé à base d'esters d'alkyle en $C_1$ à $C_8$ de l'acide acrylique, de 0,05 à 10 % en poids, par rapport au caoutchouc d'acrylate, d'un monomère polyfonctionnel et, le cas échéant, jusqu'à 40 % en poids d'un autre monomère vinylique, et d'une seconde enveloppe (c) qui représente un produit de polymérisation ou de copolymérisation de monomères formant une résine.

[1]) vergl. M. Hoffmann, K. Krämer und R. Kuhn : Polymeranalytik I u. II, Georg Thieme Verlag, Stuttgart (1977).

**0 034 748**

2. Polymères greffés sous forme de particules suivant la revendication 1, dans lesquels le rapport des quantités de (a) à (b) a une valeur de 0,1 : 99,9 à 80 : 20 et la proportion de (c) dans le polymère greffé est de 90 à 10 %.

3. Polymères greffés sous forme de particules suivant la revendication 1, dans lesquels le cœur (a) est un polybutadiène ou un copolymère du butadiène.